# EUROPÄISCHE PATENTSCHRIFT

(11) **EP 3 624 963 B1**
(45) Veröffentlichungstag und Bekanntmachung des Hinweises auf die Patenterteilung: **25.08.2021**
(21) Anmeldenummer: 18792837.9
(22) Anmeldetag: 22.05.2018
(51) Int. Cl.: B22D 11/00, B22D 11/06, B22D 25/04

(54) **VORRICHTUNG ZUM GIESSEN VON ELEKTRODENTRÄGERN FÜR BLEI-SÄURE-BATTERIEN**
DEVICE FOR CASTING ELECTRODE SUPPORTS FOR LEAD-ACID BATTERIES
DISPOSITIF DE COULÉE DE SUPPORTS D'ÉLECTRODE POUR BATTERIES AU PLOMB

(30) Priorität: 19.05.2017 DE 102017004815
(43) Veröffentlichungstag der Anmeldung: 25.03.2020
(73) Patentinhaber: IQ Power Licensing AG, 6304 Zug (CH); Nitsche, Werner, 59558 Lippstadt (DE)
(72) Erfinder: NITSCHE, Werner, 59557 Lippstadt (DE)
(74) Vertreter: de Rooij, Mathieu Julien
(86) Internationale Anmeldenummer: PCT/DE2018/000152
(87) Internationale Veröffentlichungsnummer: WO 2018/210367

(56) Entgegenhaltungen:
- DE-A1- 1 805 300
- DE-T2- 69 413 310
- DE-U- 7 825 546

## Beschreibung

Zur die Fertigung von Elektrodenträgern für positive und negative Elektroden von Blei-Säure Batterien werden die folgenden Technologien angewendet: Fallguss- oder Spritzguss-Gießtechnik, Streckmetalltechnologie, Stanztechnik sowie kontinuierlicher Guss mittels Gießtrommel.

Fallguss- und Spritzguss-Gießtechnik:
Bei der Fallguss- oder Spritzguss-Gießtechnik werden Formen, bestehend aus zwei Halbformen mit flüssigem Blei gefüllt, und die Entformung erfolgt durch Öffnung der Formenhälften nach dem Erstarren des Bleis. Die beiden Formenhälften werden mit einer Kork-Schlichte behandelt, um ein Erstarren des Bleis während des Füllens der Form zu vermeiden und die verdrängte Luft aufzunehmen. Ein Vorteil des Verfahrens ist die rautenförmige Struktur der Gitter sowie die Oberflächenrauigkeit. Beides führt zu einer guten Masse-Gitter-Haftung und die Rauigkeit vergrößert zudem die Kontaktfläche. Ein Nachteil ist die geringe Produktivität und die Beschränkung bezüglich der Legierungswahl. Weiche Legierungen und damit korrosionsbeständigere Legierungen lassen sich mit dieser Technik nicht verarbeiten. Des Weiteren bestehen aufgrund der Handhabungsnotwendigkeiten Beschränkungen hinsichtlich der Gitter-Dicke und damit des Gewichts. Die Beschränkung hinsichtlich der minimalen Gittergewichte ist ein ganz wesentlicher Kostennachteil des Fallguss-Gießverfahrens. Da alle Legierungsbestandteile Nachteile hinsichtlich Korrosion und Gitterwachstum, z.B. Ca-Legierungen, oder Wasserverbrauch, z.B. Sb-Legierungen, aufweisen, ist das Fallguss-Gießverfahren für die in Zukunft benötigten Weichblei-Legierungen nicht geeignet. Die Anforderungen hinsichtlich einer wesentlich höheren Zyklenbelastung und Lebensdauer erfordert korrosionsbeständige Weichblei-Legierungen.

Steckmetall und Stanztechnologie:
Für die Steckmetall sowie die Stanztechnologie wird zunächst ein Blei-Band gegossen und ggf. gewalzt, um einerseits die Festigkeit zu erhöhen und anderseits ein feinkörniges korrosionsbeständigeres Gefüge zu erhalten. Beide Verfahren weisen gegenüber der Fallgusstechnologie eine wesentlich höhere Produktivität auf. Bei beiden Technogien können die Stromableiter, Fahnen genannt, nur die Dicke des Bleibandes aufweisen. Dies beschränkt den elektrischen Widerstand.

Während des Streckprozesses werden die Gitterstäbe verdrillt, wodurch sich eine gute Haftungseigenschaften der Elektroden ergibt. Die wesentlichen Nachteile der Streckmetalltechnologie bestehen im Fehlen eines geschlossenen Rahmens sowie einer Beschränkung auf harte Legierungen infolge eines fehlenden geschlossenen Rahmens. Der fehlende Rahmen in Verbindung mit den harten Legierungen führt unweigerlich zu einem Problem hinsichtlich einer möglichen Beschädigung des Separators zwischen den Polaritäten. Insbesondere für AGM (Absorbent Glass Mat) Batterien sind Streckmetall-Elektrodenträger sehr problematisch.

Bei der Stanztechnologie können beliebige Gitter-Geometrien mit geschlossenem Rahmen und beliebige Legierungen verwendet werden. Dennoch weist die Stanztechnologie neben einem hohen Anlagenaufwand einen ganz wesentlichen Nachteil auf. Während des Stanzprozesses werden ca. 75 % - 85 % des Bleis ausgestanzt. Diese Stanzteile haben eine Bleioxid-Oberfläche. Ohne eine aufwendige Raffination, d.h. bei unmittelbarer Rückführung in den Bleischmelzkessel gelangt das Bleioxid in das Gitter und führt zu erhöhter Korrosion. Es lassen sich zwar beliebige Bleilegierungen verarbeiten, jedoch muss die Anlagengeschwindigkeit bei weichen Legierungen erheblich reduziert werden.

Kontinuierlicher Guss mittels Gießtrommel:
Der kontinuierliche Guss von Bleielektroden mit Hilfe einer Gießtrommel mit eingravierter Gitterstruktur und eines Gießschuhes, mit dem flüssiges Blei in die Gitterstruktur geleitet wird, ist bezüglich der Gießgeschwindigkeit unabhängig von der Legierungszusammensetzung, sodass auch Weichblei produktiv verarbeitet werden kann. Darüber hinaus kann der Stromableiter, die Fahne, dicker ausgeführt werden als das Gitter und der Rahmen oder Gitterstege stärker als die übrigen inneren Gitterstäbe gefertigt werden.

Vorrichtungen mit einer Gießtrommel zum Gießen von Bleielektroden werden zum Beispiel in DE 78 25 546 U, DE 18 05 300 A1 und DE 694 13 310 T2 beschrieben.

Die derzeit verfügbare kontinuierliche Gießtechnologie weist jedoch einen gravierenden Nachteil im Hinblick auf positive Elektroden auf:
Um das Gitterband aus der Trommel zu entformen, wird bei den Anlagen gemäß dem Stand der Technik eine Entformungsschräge von größer als 10 Grad in der Gittergravur benötigt. Die Entformungsschräge erfordert eine Überpastierung auf der Schuhseite, um analog eines Schwalbenschwanzes ein Ausgleiten aus dem Gitter zu vermeiden. Die trapezförmige Querschnittsfläche ist zudem im Hinblick auf die Korrosion ungünstig, da die Korrosion durch die Stelle des geringsten Querschnittes bestimmt wird. Somit wird im Vergleich zu einem quadratischen Querschnitt mehr Blei benötigt. Der wesentlichste Nachteil besteht aber in der Asymmetrie des Gitters und der Platte, die bei positive Elektroden während der Lade- / Entladevorganges durch unterschiedliche Volumen im Lade- sowie Entladezustand zu einer Wölbung führt, wodurch einerseits die aktive Masse vom Gitter getrennt wird und andererseits ein erheblicher Druck auf den Scheider ausgeübt wird. Aus diesem Grund werden Gitter aus kontinuierlichem Guss nicht für positive Elektroden eingesetzt.

Es lässt sich somit zusammenfassen, dass das Fehlens von Stanzrückläufen und den damit, wie zuvor beschrieben, korrosionsfördernden Bleioxiden, durch den geringeren ohmschen Widerstand durch dickere Fahnen und der hohen Gießgeschwindigkeit unabhängig von der Legierung sich deutliche Vorteile für das kontinuierliche Gießverfahren ergeben. Besonders nachteilig hingegen ist die Entformungsschräge der Gitterstäbe.

Eine Lösung zur Vermeidung des asymmetrischen Gitters des kontinuierlichen Gießverfahrens konnte überraschend durch Anwendung einiger physikalischer Verfahren gefunden werden. Die bisherige ingenieurmäßige Realisierung basiert auf den in Lehrbüchern vermittelten Abrollen von Zahnrädern und Zahnriemen, die Entformungsschrägen benötigen.

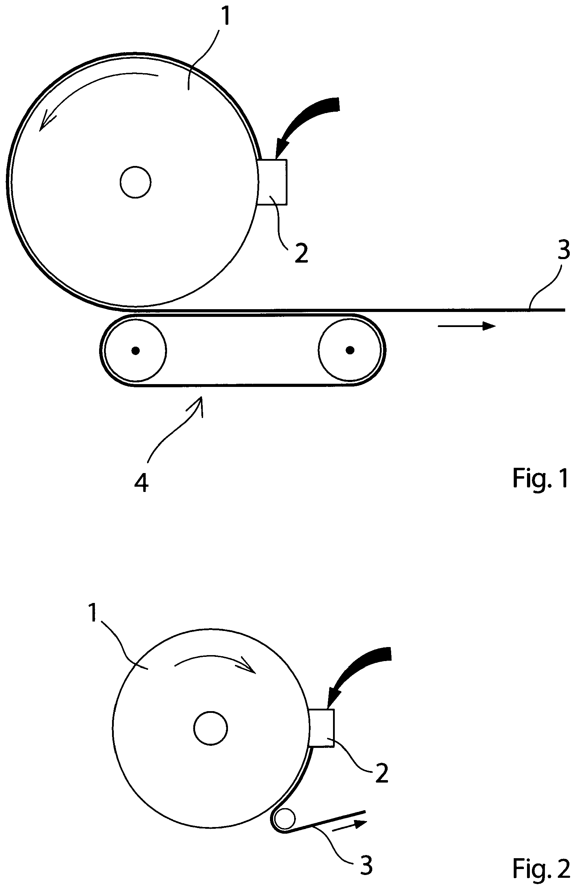

Durch eine Änderung der Laufrichtung der heutigen kommerziellen Anlagen gemäß Fig. 1 und einer Vergrößerung des Trommelradius kann eine Entformung mit kleiner Entformungsschräge von kleiner als 7 Grad erfolgen. Es ist vorteilhaft Trommeln mit einem Radius von größer als 1 m, bevorzugt größer als 1,2 m zu verwenden, wodurch die Entformung einfacher erfolgt. Auf das Blei-Gitterband wirkt nach ca. 270 Grad bei der gezeigten Anordnung des Gießschuhes am unteren Scheitelpunkt nur noch eine Kraftkomponente in Richtung der Erdanziehungskraft. Somit entfallen jegliche Gewichts-Kraftkomponenten senkrecht zur Erdanziehungskraft am unteren Scheitelpunkt, sodass das Gitter aus der eingravierten Gießform durch Einwirkung der Schwerkraft fallen würde, würden nicht noch Adhäsionskräfte durch das Gleitmittel vorliegen, welches auf die Gießtrommel zur Reduzierung der Reibung zwischen Gießschuh und Gießtrommel aufgetragen werden muss. Das Gitter fällt somit, abgesehen von Adhäsionskräften durch Trennmittel, aus der Trommel bei einer sehr geringen Entformungsschräge von kleiner als 5 Grad, in der Regel 3 Grad, wodurch die Gitterstäbe eine nahezu ideale rechteckige Querschnittsfläche aufweisen.

Zur Unterstützung der Überwindung der geringen Adhäsionskräfte kann heiße Pressluft in den Spalt zwischen Trommel und Gitter geblasen werden oder in geeigneter Weise mit einem parallel laufenden Vakuumband das gegossene Bleigitterband angesaugt werden. Auch eine Klopfvorrichtung oder eine Vibrationseinrichtung sind geeignet, die Adhäsionskräfte zu überwinden. Weiterhin wird vorgeschlagen, eine Kokillentrennschlichte in die Gravur der Gießtrommel einzubringen. Die Öffnungen des Vakuumbands sind an die Kontur des Bleigitterbandes angepasst, wodurch ein effektiver Kraftschluss erfolgt, der das Bleigitterband aus der eingravierten Gitterform zieht.

Ein Gitter mit so geringer Entformungsschräge kann als rechteckig symmetrisch betrachtet werden, analog gestanzter Gitter. Die derart im kontinuierlichen Guss erzeugten Gitter sind ausreichend symmetrisch und neigen nicht zur Biegung im bestimmungsmäßigen Betrieb in der Batterie, sofern die aktive Masse gleich stark auf die Unter- sowie Oberseite des Gitters aufgebracht wird.

Bei kontinuierlichen Gießanlagen fallen auch keine Stanzabschnitte an, die in einem Legierprozess von Bleioxiden gereinigt werden müssen. Die Kosten für den zusätzlichen Legierschritt betragen mindestens 10% des Preises für die Beschaffung von Blei. Wird auf den Legier-Prozess verzichtet, verringert sich die Korrosionsbeständigkeit der Gitter in den Batterien.

Die Vorrichtung ist besonderen für die Fertigung von Blei-Elektrodengittern mit geringen Legierungsanteilen sowie für reine Blei-Zinn-Legierungen geeignet. Diese Legierungen eignen sich besonders für AGM Batterien sowie für Hybrid Anwendungen im KFZ. Als Legierungsbestandteile zur Verfestigung des Gitters werden Kalzium oder Strontium Legierungen eingesetzt. Beide Legierungen führen zu einer erhöhten Korrosion. In der Vergangenheit eingesetztes Antimon führt zu hohem Wasserverbrauch und kann für wartungsfreie Batterien nicht eingesetzt werden. Reine Blei-Zinn-Legierungen haben sich als besonders korrosionsbeständig erwiesen und weisen extrem geringen Wasserbrauch auf. Darüber hinaus vermeidet die Weichblei-Gitter Technologie eine Krafteinwirkungen und Beschädigungen der Separatoren, speziell von Glasvlies Separatoren, wie sie bei den AGM Batterien zum Einsatz kommen.

Durch nachfolgendes Sandstrahlen kann einerseits die Oberfläche des Bleibands aufgeraut und anderseits noch verbliebenes Trennmittel entfernt werden. Durch das Sandstrahlen wird somit die Oberfläche vergrößert, was zu einer besseren Masse-Gitter-Haftung und damit zur besseren Stromableitung führt. Das Sandstrahlen wird gleichzeitig von oben und von unten durchgeführt.

Als besonders vorteilhaft hat sich herausgestellt, wenn die Sandstrahl-Düsen gegeneinander gerichtet sind. Damit wird besonders bei weichen Legierungen eine Deformation der Gitterstruktur vermieden, da sich die Impulse des auftreffenden Strahlmaterials kompensieren. Es kann mit höheren Strahldrücken gearbeitet werden, die eine größere Oberflächenrauigkeit bewirken.

Die Anlage wird nachfolgend an Hand einer schematischen Zeichnung näher beschrieben.
- Fig. 1: zeigt die vorstehend beschriebene Anlage in der Seitenansicht.
- Fig. 2: zeigt eine Anlage des Stands der Technik.

Die Fig. 1 zeigt eine Trommel 1, in deren Oberfläche die Form des zu gießenden Bleibands 3 eingraviert ist. Ein sogenannter Gießschuh 2 liegt am Außenumfang der Trommel im Bereich der durch deren Drehachse gezogenen Horizontalen an. Im vorliegenden Fall ist der Gießschuh 2 auf der rechten Seite der Trommel angeordnet, die sich gegen den Uhrzeigersinn dreht. Das aus dem Gießschuh 2 austretende flüssige Blei läuft in die konkave Form in der Trommeloberfläche. Nach einer dreiviertel Umdrehung wird das erstarrte Bleiband mit dem Vakuumband 4 abgenommen. Das Vakuumband hilft, ggf. vorhandene Adhäsionskräfte zu überwinden.

Die Fig. 2 zeigt die handelsüblichen Anlagen für einen kontinuierlichen Guss von Bleigittern für die Elektroden von Blei-Säure Batterien.

## Patentansprüche

1. Vorrichtung zum Gießen von Elektrodenträgern zur Herstellung von Blei-Gitterelektroden im kontinuierlichen Gießverfahren, wobei die Vorrichtung nachfolgende Merkmale aufweist:
- eine Gießtrommel (1), in deren Oberfläche die Form des zu gießenden Bleibands (3) eingraviert ist und **gekennzeichnet durch** Entformungsschrägen kleiner 7 Grad, im Besonderen kleiner 3 Grad, sowie
- einen Gießschuh (2), der am Außenumfang der Gießtrommel (1) im Bereich der durch deren Drehachse gezogenen Horizontalen rechtsseitig anliegt, wenn sich die Gießtrommel (1) entgegengesetzt zum Uhrzeigersinn dreht,
wobei das austretende flüssige Blei in die konkave Form der Gießtrommeloberfläche läuft und nach einer dreiviertel Umdrehung als erstarrtes Bleiband am unteren Scheitelpunkt der Gießtrommel (1) durch Einwirkung der Schwerkraft abnehmbar ist.

2. Vorrichtung nach Anspruch 1, wobei zur Entnahme des Bleibands (3) eine Vakuum Einrichtung vorgesehen ist.

3. Vorrichtung nach Anspruch 1, wobei zur Entnahme des Bleibands eine Blasvorrichtung vorgesehen ist, die Druckluft zwischen das gegossen Gitterband (3) und der Trommelgravur bläst.

4. Vorrichtung nach Anspruch 1, wobei zur Entnahme des Bleibands (3) eine Vibrationsvorrichtung vorgesehen ist.

5. Vorrichtung nach Anspruch 2, wobei ein Vakuumband (4) vorgesehen ist.

6. Vorrichtung nach Anspruch 5, wobei das Vakuumband (4) ein an die Gitterstruktur des Bleibands (3) angepasstes Lochmuster aufweist.

7. Vorrichtung nach Anspruch 1, wobei im Bereich der Entnahmestelle eine Hammervorrichtung vorgesehen ist, die Hammerschläge mit einer vorbestimmten Frequenz auf die Gießtrommel (1) aufbringt.

8. Vorrichtung nach Anspruch 1, wobei ein Leitblech oberhalb des entnommenen Bleigitters am Scheitpunkt vorgesehen ist, das die Entformung unterstützt.

9. Vorrichtung nach Anspruch 1, wobei eine Sandstrahleinrichtung vorgesehen ist, bei der Düsenpaare gegeneinander gerichtet sind und das Bleiband (3) zwischen den gegeneinander gerichteten Düsen hindurch läuft.

## Claims

1. A device for casting electrode substrates for the production of lead grid electrodes in a continuous casting process, wherein the device has the following features:
- a casting drum (1), the surface of which has been engraved with the shape of lead strip (3) to be cast and **characterised by** draft angles of less than 7 degrees, in particular less than 3 degrees, and
- a casting shoe (2) which rests on the right side of the outer circumference of the casting drum (1) in the area of the horizontal line drawn through its axis of rotation when the casting drum (1) rotates counterclockwise,
wherein the exiting liquid lead flows into the concave shape of the casting drum surface and can be removed by the action of gravity as a solidified lead strip at the lower vertex of the casting drum (1) after three quarters of a turn.

2. The device according to claim 1, wherein a vacuum device is provided for removing the lead strip (3).

3. The device according to claim 1, wherein a blower device is provided for removing the lead strip, which blower device blows compressed air between the cast grid strip (3) and the drum engraving.

4. The device according to claim 1, wherein a vibration device is provided for removing the lead strip (3).

5. The device according to claim 2, wherein a vacuum belt (4) is provided.

6. The device according to claim 5, wherein the vacuum belt (4) has a hole pattern adapted to the grid structure of the lead tape (3).

7. The device according to claim 1, wherein a hammer device is provided in the region of the removal point, which hammer device applies hammer blows to the casting drum (1) at a predetermined frequency.

8. The device according to claim 1, wherein a guide plate is provided above the removed lead grid at the vertex, which supports the demoulding.

9. The device according to claim 1, wherein a sandblasting device is provided in which the pairs of nozzles are directed towards one another and the lead strip (3) runs through between the nozzles directed towards one another.

## Revendications

1. Dispositif de coulée de porte-électrodes destiné à la fabrication d'électrodes à grille de plomb dans un procédé de coulée continue, le dispositif présentant les caractéristiques suivantes :
- un tambour de coulée (1), à la surface duquel la forme de la bande de plomb (3) à couler est gravée et **caractérisé par** des angles de dépouille inférieurs à 7 degrés, en particulier inférieurs à 3 degrés, ainsi
- qu'un sabot de coulée (2), lequel repose sur la circonférence extérieure du tambour de coulée (1) dans la zone de la ligne horizontale passant par son axe de rotation à droite lorsque le tambour de coulée (1) tourne dans le sens inverse des aiguilles d'une montre,
dans lequel le plomb liquide sortant s'écoule dans la forme concave de la surface du tambour de coulée et après trois quarts de tour, il peut être retiré sous forme de bande de plomb solidifiée au sommet inférieur du tambour de coulée (1) par l'action de la gravité.

2. Dispositif selon la revendication 1, dans lequel un dispositif à vide est destiné à retirer la bande de plomb (3).

3. Dispositif selon la revendication 1, dans lequel un dispositif de soufflage est destiné à retirer la bande de plomb, lequel souffle de l'air comprimé entre la bande de grille coulée (3) et le tambour de gravure.

4. Dispositif selon la revendication 1, dans lequel un dispositif vibratoire est destiné à retirer la bande de plomb (3).

5. Appareil selon la revendication 2, dans lequel une bande à vide (4) est fournie.

6. Appareil selon la revendication 5, dans lequel la bande à vide (4) comporte un motif à trous adapté à la structure à grille de la bande de plomb (3).

7. Dispositif selon la revendication 1, dans lequel un dispositif marteau est situé dans la zone du point d'enlèvement, ledit marteau appliquant une fréquence prédéterminée au tambour de coulée (1).

8. Dispositif selon la revendication 1, dans lequel une plaque de guidage est située au-dessus de la grille de plomb retirée au sommet, laquelle supporte le démoulage.

9. Dispositif selon la revendication 1, dans lequel un dispositif de sablage est fourni dans lequel les paires de buses sont dirigées l'une vers l'autre et la bande de plomb (3) passe entre les buses dirigées l'une vers l'autre.
